# EUROPÄISCHE PATENTSCHRIFT

(11) **EP 0 487 858 B1**
(45) Veröffentlichungstag und Bekanntmachung des Hinweises auf die Patenterteilung: **12.06.1996**
(21) Anmeldenummer: 91116736.9
(22) Anmeldetag: 01.10.1991
(51) Int. Cl.: C08L 51/04, C08L 25/10, C08J 5/18

(54) **Folien zum Verpacken von niedrigviskosen Kautschuken**
Foils for packaging low viscosity rubbers
Feuilles d'emballage pour caoutchouc de basse viscosité

(30) Priorität: 20.11.1990 DE 4036929
(43) Veröffentlichungstag der Anmeldung: 03.06.1992
(73) Patentinhaber: BUNAWERKE HÜLS GMBH, D-45743 Marl (DE)
(72) Erfinder: Breuker, Walter, W-4358 Haltern (DE); Knickelbein, Hans-Günter, W-2890 Nordenham (DE); Heeren, Wolfgang, W-2890 Nordenham (DE); Ostendorf, Manfred, W-2890 Nordenham (DE)

(56) Entgegenhaltungen:
- EP-A- 0 048 388
- BE-A- 693 858
- DE-A- 2 510 070
- FR-A- 2 443 481
- GB-A- 2 056 465
- US-A- 3 907 931

## Beschreibung

Es ist bekannt, das Eigenschaftsbild an sich spröder thermoplastischer Kunststoffe durch Zugabe von Elastomeren zu verändern. So werden charakteristische Merkmale wie Schlagzähigkeit, Kerbschlagzähigkeit und Reißdehnung von z. B. Polystyrol mit Hilfe gängiger Kautschuke wesentlich verbessert (Encyclopedia of Polymer Science and Engineering, Second Edition, Vol. 16, 1989, Seiten 88 bis 97). Die so modifizierten Polystyrole sind in der Literatur als HIPS (high impact polystyrene) beschrieben. Zu ihrer Herstellung geht man in der Regel so vor, daß die schlagfestmachende Kautschukkomponente in dem monomeren Styrol gelöst und anschließend polymerisiert wird [R. H. M. Simon and D. C. Chappelear in Polymerization Reactors and Process, J. N. Henderson and Th. C. Bouton (Editors), ACS Symposium Series, 1979, Seiten 71 bis 112].

Für die Herstellung von HIPS werden bevorzugt niedrigviskose Kautschuke eingesetzt, d. h. solche mit einer Mooneyviskosität ML(1+4) bei 100 °C von 35 bis 55 und einer Lösungsviskosität von 40 bis 150 mPa s. Solche Kautschuke haben bei Transport und Lagerung den Nachteil des hohen "kalten Flusses". Aus diesem Grunde werden an die Verpackungsfolie des im allgemeinen in Ballenform angelieferten Kautschuks besonders hohe Ansprüche gestellt. Es muß unbedingt vermieden werden, daß die Folie aufplatzt oder aufreißt und dadurch Verklebungen der Kautschukballen untereinander bzw. mit dem Verpakkungsgebinde auftreten. Ereignisse dieser Art haben nicht nur einen hohen Personal- und damit Kostenaufwand zur Folge, sondern führen auch zu einer Minderung der Produktqualität.

EP-A-0 048 448 beschreibt die Herstellung einer thermoplastischen Formmasse, die die Beseitigung der Verarbeitungstemperaturabhängigkeit der Festigkeit (Spalte 1, Zeile 31) und Verbesserung des Oberflächenglanzes (Spalte 3, Zeile 48) zum Ziele hat.

USP 3 907 931 beschreibt Zwei-Komponentenpolystyrolgemische von hoher Schlagfestigkeit. Ziel ist die Herstellung einer Polymermasse, die eine hohe Schlagfestigkeit sowohl bei Raumtemperatur als auch bei Temperaturen von - 18 °C und tiefer besitzt.

Aufgabe der Erfindung war es daher, eine Folie zum Verpacken von niedrigviskosen Kautschuken zu entwickeln, die sich durch hohe Dehnung und hohe Festigkeit sowie durch gute Verschweißbarkeit auszeichnet. Außerdem soll diese Folie ebenso wie der darin verpackte Kautschuk vollständig in monomeren Vinylaromaten, vorzugsweise Styrol, löslich sein.

Die Aufgabe wurde erfindungsgemäß durch die in den Ansprüchen beschriebenen ausgewählten Maßnahmen gelöst.

Ausgegangen wird dabei von einer Mischung der Komponenten 1 und 2, wobei Komponente 1 ein schlagfestes (Pfropf-)Mischpolymerisat mit einem Anteil von
1.1 95 bis 85 % Vinylaromat und
1.2 5 bis 15 % 1,3-Dien
und Komponente 2 ein lineares oder radiales Blockcopolymerisat mit einem Anteil von
2.1 25 bis 45 % Vinylaromat und
2.2 75 bis 55 % 1,3-Dien
ist und die Komponente 1 zu 55 bis 70 % in der Mischung aus 1 und 2 enthalten ist.

Die Herstellung der Komponente 1, vorzugsweise eines mit einem Dienkautschuk, wie z. B. Polybutadien, schlagfest gemachten Polystyrols kann wie von R. H. M. Simon und D. C. Chappelear beschrieben (s. o.) erfolgen. Dabei können Dienkautschuke eingesetzt werden, die mit den unterschiedlichsten Katalysatorsystemen hergestellt werden. Bevorzugt ist ein Polybutadien mit einem cis-Gehalt von größer als 96 %.

Im allgemeinen beträgt in der Komponente 1 der Anteil des Vinylaromaten 95 bis 85 %, vorzugsweise 92 bis 88 %. Geeignete Vinylaromaten sind Styrol, α-Methylstyrol, o-, m-, p-Methylstyrol, 2,4-Dimethylstyrol und tert.-Butylstyrol, wovon Styrol besonders bevorzugt ist.

Der Anteil des 1,3-Diens in der Komponente 1 beträgt entsprechend den Anteilen des Vinylaromats im allgemeinen 5 bis 15 %, vorzugsweise 8 bis 12 %. Geeignete 1,3-Diene sind Butadien und Isopren, wovon dem Butadien die größte Bedeutung zukommt.

Bei der Komponente 2 handelt es sich um lineare oder radiale (verzweigte) Blockcopolymerisate, wobei diese aus zwei oder mehreren Monomeren aufgebaut sein können. Als monomere Vinylaromaten eignen sich die bereits zur Herstellung der Komponente 1 angeführten Verbindungen (Styrol und dessen Derivate), bevorzugt wird Styrol eingesetzt. Bei den 1,3-Dienen können Butadien und Isopren eingesetzt werden, wobei Butadien bevorzugt wird. Der Anteil des Vinylaromats beträgt im allgemeinen 25 bis 45 % in der Komponente 2, ein Anteil von 38 bis 42 % des Vinylaromats wird bevorzugt, besonders bevorzugt wird jedoch ein Anteil von 39 bis 41 % Vinylaromat in der Komponente 2.

Als Blockcopolymerisate kommen sowohl Zweiblock- als auch Dreiblockcopolymerisate zur Anwendung. Bevorzugt werden in der Komponente 2 Styrol-Butadien-Dreiblockcopolymerisate mit linearer (S-B-S) und radialer [(S-B)ₙ] Struktur eingesetzt. Dabei wird ein radial aufgebautes StyrolButadien-Blockcopolymer mit mittel ständigem Butadiensegment und endständigen Styrolblöcken besonders bevorzugt.

Hergestellt wird die Komponente 2 nach dem Prinzip der anionischen Polymerisation (living anionic polymerization). Es können dabei bekannte mono- sowie bifunktionelle Initiatoren, vornehmlich Organolithium-Reagenzien, bevorzugt n-Butyllithium eingesetzt werden. Zur Herstellung von radialen Blockcopolymeren ist zusätzlich ein Kupplungsreagenz erforderlich.

Die Synthese der beanspruchten Blockcopolymeren kann nach den literaturbekannten Methoden erfolgen. In M. Morton, Anionic Polymerization: Principles and Practise, Academic Press, N. Y. 1983, finden sich zahlreiche Beispiele der Herstellungsmethoden von linearen (Seiten 179 bis 220) sowie radialen Blockcopolymeren (Seiten 221 bis 232). Weiterhin findet man detaillierte Angaben in A. Noshay und J. E. McGrath, Block Copolymers, Academic Press, N. Y. 1977, bezüglich Diblockcopolymerer (Seiten 83 bis 185) und Triblockcopolymerer (Seiten 186 bis 304); ebenfalls sind spezielle Methoden zur Herstellung von radialen Blockcopolymerisaten (Seiten 229 bis 232) enthalten. Außerdem befinden sich zahlreiche Produkte, z. B. KRATON^{R} oder CARIFLEX^{R}, im Handel.

Zur Herstellung der erfindungsgemäßen Folien geht man in der Regel so vor, daß man zunächst die stabilisierten Komponenten 1 und 2 im gewünschten Verhältnis miteinander mischt. Geeignete Mischaggregate sind vorzugsweise Stempelkneter, z. B. der Firmen Farell oder Buss. Da bei dem Mischvorgang die meist in Granulatform eingesetzten Komponenten 1 und 2 mechanisch geschert und thermisch belastet werden, ist die Zugabe eines Stabilisators erforderlich. Zweckmäßigerweise wird ein solcher Stabilisator eingesetzt, der auch bereits in den Ausgangskomponenten enthalten ist. Geeignete Stabilisatoren sind solche, die in der Kautschuktechnologie als Alterungsschutzmittel für Festkautschuke Verwendung finden. Sie stammen gewöhnlich aus der Gruppe der aromatischen Amine, sowie deren Kondensationsprodukte mit Aldehyden und Ketonen, der Phenole, der Mercaptoverbindungen, der Phosphide und der Sulfide ("Roh- und Hilfsstoffe in der Gummi industrie", VEB Deutscher Verlag für Grundstoffindustrie, Leipzig, 1968, Seiten 213 bis 216). Die Stabilisatoren, die gewöhnlich in den Ausgangskomponenten bis zu 2 Gewichtsprozent enthalten sind, werden vor dem Mischen nochmals in einer Menge bis zu 0,5 Gewichtsprozent, vorzugsweise 0,05 bis 0,2 Gewichtsprozent, bezogen auf die Mischung, zugegeben.

Als weiteres Verarbeitungs- und Dispersionshilfsmittel wird dem Compound eine geringe Menge einer Fettsäure oder ein Derivat derselben, vorzugsweise ein Metallsalz einer Fettsäure, zugegeben. Als Fettsäure kommt dabei hauptsächlich die Stearinsäure in Betracht, als Metall können Na, K, Mg, Ca oder Zn verwendet werden (F. W. Barlow, Rubber Compounding, Marcel Dekker, Inc. New York (1988), S. 190 - 193). Vorzugsweise werden der Mischung 0,05 bis 5 %, besonders bevorzugt 0,05 bis 2 % eines Metallstearats zugegeben. Dabei kommt Calcium- sowie Zinkstearat die größte Bedeutung zu.

Das Mischen der Komponenten 1 und 2 wird im allgemeinen bei Temperaturen von maximal 160 °C, vorzugsweise 140 bis 155 °C, durchgeführt. Die Mischzeit beträgt im allgemeinen ca. 2 Minuten.

Nach Beendigung des Mischvorgangs wird die Mischung durch einen Extruder gefahren und ebenfalls bei maximal 160 °C granuliert.

Das Compound wird sodann über eine Förder- und Dosiervorrichtung einer vorzugsweise vertikal angeordneten Extrusionsanlage mit rotierenden Doppelextrudern zugeführt.

Zur schonenden Verarbeitung des Compounds sind die Extruder mit Heiz- und und Kühlzonen hoher Regelgenauigkeit ausgestattet. Das Angelieren des Materials wird durch Begrenzung der Massetemperatur auf vorzugsweise 150 °C verhindert.

Die plastifizierte Masse wird über Siebkörper und Adapter zum nachfolgenden Folienblaskopf mit kombiniertem Steghalter und Wendenutverteiler geführt.

Adapter und Folienblaskopf sind mit Heizzonen hoher Regelgenauigkeit ausgerüstet. Vorzugsweise befinden sich am Adapter Meßstellen zum Messen von Massetemperatur und Massedruck.

Nach Verlassen des Kopfes wird die Schmelze durch einen regelbaren Kühlluftring geführt und durch ein exakt zu bestimmendes Stützluft-Volumen zum Folienschlauch geblasen, der durch eine Flachlegevorrichtung zusammengelegt wird. Der zusammengelegte Folienschlauch wird durch ein Abzugwalzenpaar abgezogen und mittels einer Aufwickelstation aufgewickelt.

Die Flachlegevorrichtung besteht zur faltenfreien Zusammenlegung des Folienschlauches vorzugsweise aus zwei im spitzen Winkel stehenden verstellbaren Lochplatten, die mit textilen Stoffen bespannt sind. Im unteren Bereich der Flachlegung befinden sich stationäre, stufenlos regelbare elektrische Heizkörper.

Zur Vermeidung von Zugluft und Absicherung der vorgegebenen Fertigungsbedingungen ist die Gesamtanlage gekapselt.

Im allgemeinen haben die Folien eine Stärke von maximal 200 µm, bevorzugt ist eine Stärke von 50 bis 100 µm. Zur weiteren Charakterisierung der Folien dienen Gelgehalt (bestimmt nach einer Hausvorschrift der Bunawerke Hüls GmbH, siehe Beispiel 1), Dehnung in Längs- und Querrichtung (bestimmt nach DIN 53 455) und das Verhältnis von Haft- zu Gleitreibung (bestimmt nach DIN 53 375). Für den beanspruchten Zweck besonders geeignete Folien sind solche, mit einem Gelgehalt von maximal 100 ppm, mit einer Reißfestigkeit in Längsrichtung von mindestens 17 MPa, in Querrichtung von mindestens 20 MPa, mit einer Dehnung in Längsrichtung von mindestens 250 %, in Querrichtung von mindestens 210 % und einem Verhältnis von Haft- zu Gleitreibung von 0,8 bis 1,8.

Die Erfindung wird anhand der nachfolgenden Beispiele näher erläutert.

### Beispiel 1 und Vergleichsbeispiele A - D

Die beschriebenen Rohstoffe (Komponente 1 und 2), ein auch in den Rohstoffen verwendeter Stabilisator und eine Puffersubstanz werden in einen Stempelmischer der Firma Farell eingefüllt und auf ein Batchgewicht von 25 kg eingestellt:
- Komponente 1:: 59,9 % ≙ 14,98 kg
- Komponente 2:: 39,9 % ≙ 9,98 kg
- Stabilisator:: 0,1 % ≙ 0,025 kg
- Calciumstearat:: 0,1 % ≙ 0,025 kg

- Komponente 1:: Schlagfestes Polystyrol mit 9,5 % 1,3 Butadien (VESTYRON^{R} V 638 der Hüls AG, Marl)
- Komponente 2:: Radiales Styrol-Butadien-Dreiblockcopolymer (FINAPRENE^{R} 414, Deutsche Fina GmbH, Frankfurt/Main)
- Stabilisator:: IRGANOX^{R} 1076 (Ciba-Geigy, Basel, Schweiz)

Nach dem Schließen des Stempels (Stempeldruck 5 bar) wird die Mischung gestartet und über eine Zeit von ca. 2 Minuten homogenisiert. Die Temperatur der Mischung wird dabei bis auf 151 °C gesteigert und über die Drehzahl des Mischers geregelt.

Das so hergestellte Compound wird mit einem Doppelwellenextruder thermisch schonend bei einer Massetemperatur am Kopf des Extruders von 155 °C granuliert. In einem weiteren Extruder wird das Granulat erneut aufgeschmolzen und bei Temperaturen von max. 170 °C zu einer 100 µm starken Folie verblasen.

Zur Verpackung von Kautschukballen wird die Folie zwischen 850 bis 950 mm breit auf Rollen gewickelt.

Die Qualitätskontrolle erfolgt nach den vorne beschriebenen Kriterien, die auf DIN-Vorschriften basieren.

Die Bestimmung des Gelgehaltes erfolgt nach einer Hausvorschrift der Bunawerke Hüls GmbH. 25 g Folie werden bei Raumtemperatur in 975 g Toluol unter Rühren mit einem Magnetrührer (750 min⁻¹) innerhalb von 10 Stunden gelöst.

Anschließend wird die Lösung über ein vorgewogenes Metallsiebgewebe mit einer Maschenweite von 40 µm filtriert und der Rückstand mit ca. 100 ml Toluol gewaschen. Nach dem Trocknen über 30 Minuten bei 120 °C erfolgt die Rückwaage und Errechnung des Gelanteils in ppm, bezogen auf die Einwaage.

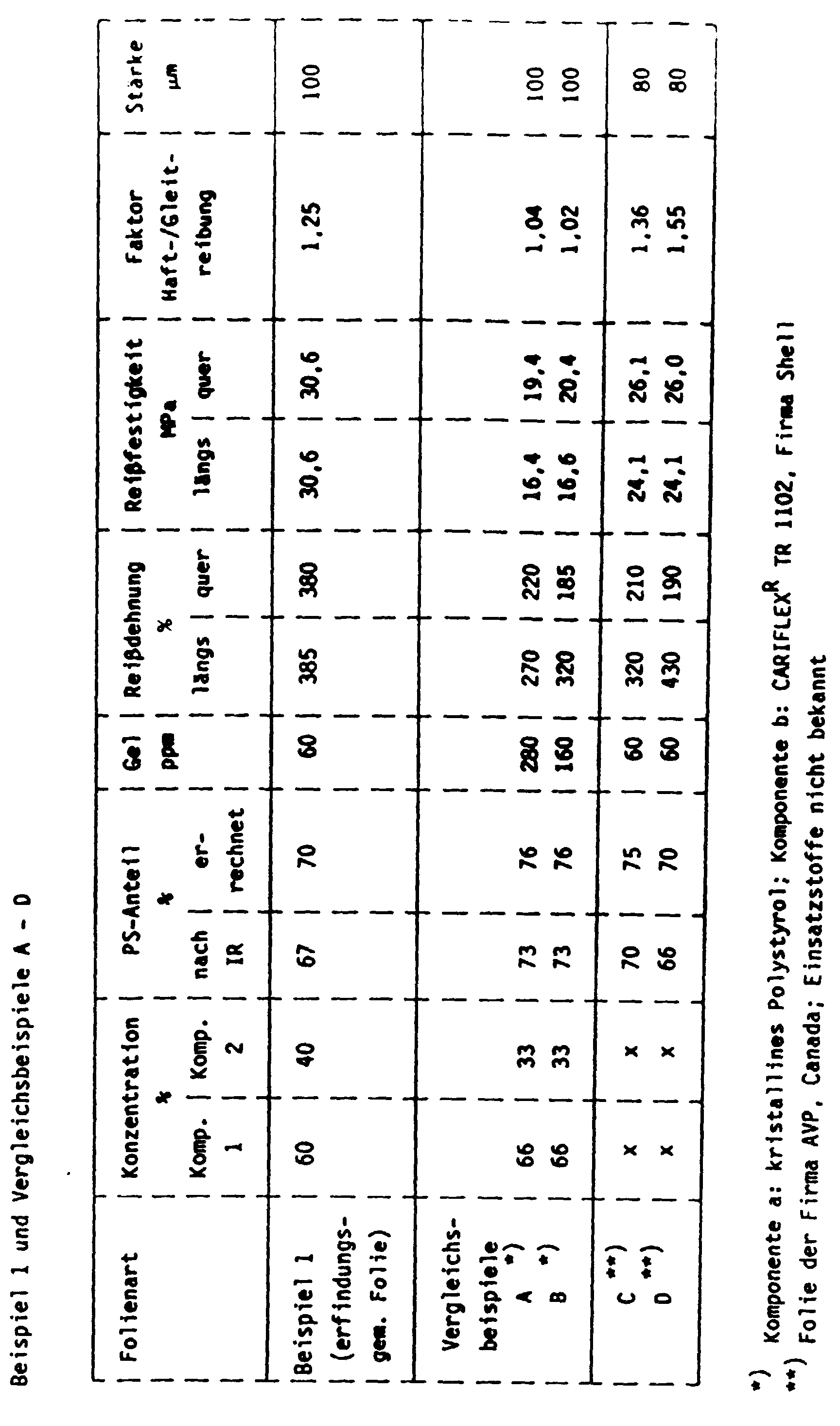

## Patentansprüche

1. Folien zum Verpacken niedrigviskoser Kautschuke, hergestellt aus einer thermoplastischen Formmasse, enthaltend eine Mischung der Komponenten 1 und 2, wobei
1 ein schlagfestes (Pfropf-)Mischpolymerisat mit einem Anteil von
1.1 95 bis 85 Gew.-% Vinylaromat und
1.2 5 bis 15 Gew.-% 1,3-Dien
und
2 ein lineares oder radiales Blockcopolymerisat mit einem Anteil von
2.1 25 bis 45 Gew.-% Vinylaromat und
2.2 55 bis 75 Gew.-% 1,3-Dien
ist und die Komponente 1 zu 55 bis 70 Gew.- in der Mischung aus 1 und 2 enthalten ist.

2. Verwendung der Folien gemäß Anspruch 1 zusammen mit dem darin verpackten niedrigviskosen Kautschuk bei der Herstellung von schlagfesten Polyvinylaromaten.

3. Verwendung nach Anspruch 2,
dadurch gekennzeichnet,
daß der Polyvinylaromat aus Styrol aufgebaut ist.

## Claims

1. Sheets for packaging low-viscosity rubbers, produced from a thermoplastic moulding compound containing a mixture of the components 1 and 2, where
1 is an impact-resistant (graphed) copolymer containing a proportion of
1.1 95 to 85% by weight of vinyl aromatic and
1.2 5 to 15% by weight of 1,3-diene
and
2 is a linear or a radial block copolymer containing a proportion of
2.1 25 to 45% by weight of vinyl aromatic and
2.2 55 to 75% by weight of 1,3-diene
and the mixture of 1 and 2 contains 55 to 70% by weight of the component 1.

2. Use of the sheets according to Claim 1 together with the low-viscosity rubber packaged therein in the production of impact-resistant polyvinyl aromatics.

3. Use according to Claim 2, characterized in that the polyvinyl aromatic is synthesized from styrene.

## Revendications

1. Feuilles destinées à l'emballage de caoutchouc à basse viscosité, produites à partir d'une matière moulable thermoplastique, contenant un mélange des composants 1 et 2, dans lequel :
1 est un polymère mixte (-implanté) résistant au choc avec une proportion de
1.1 95 à 85 % en poids de 1,3-diène et
1.2 5 à 15 % en poids de 1,3-diène.
Et
2 est un copolymère en masse linéaire ou radial avec une proportion de
2.1 25 à 45 % en poids d'aromatique vinylique et
2.2 55 à 75 % en poids de 1,3-diène
et le composant 1 est contenu de 55 à 70 % en poids dans le mélange de 1 et 2.

2. Utilisation des feuilles selon la revendication 1 ensemble avec le caoutchouc à basse viscosité emballé dedans lors de la fabrication d'aromatiques polyvinyliques.

3. Utilisation selon la revendication 2, caractérisé en ce que l'aromatique polyvinylique est confectionné à partir du styrène.
